# EUROPEAN PATENT APPLICATION

(11) **EP 4 693 157 A1**
(43) Date of publication of application: **11.02.2026**
(21) Application number: 24779945.5
(22) Date of filing: 22.03.2024
(51) Int. Cl.: G06Q 50/06, G05B 23/02, G06Q 10/04

(54) **PLANT OPERATION SUPPORT DEVICE, OPERATION SUPPORT PROGRAM, AND OPERATION SUPPORT METHOD**

(30) Priority: 30.03.2023 JP 2023054850
(71) Applicant: Chiyoda Corporation, Kanagawa 220-8765 (JP)
(72) Inventor: KAWAI, Eiji, Yokohama-shi Kanagawa 220-8765 (JP); FURUICHI, Kazuya, Yokohama-shi Kanagawa 220-8765 (JP); KOYAMA, Takanori, Yokohama-shi Kanagawa 220-8765 (JP)
(74) Representative: Gulde & Partner
(86) International application number: PCT/JP2024/011252
(87) International publication number: WO 2024/203827

(57) **Abstract**

An operation of a system that produces a substance or energy using electric power is appropriately supported. An operation support device 100 comprises: an electric power information acquisition unit configured to acquire current information or predicted information regarding electric power supplied to a plant that produces a substance or energy using the electric power; a material information acquisition unit configured to acquire current information or predicted information regarding a material for producing the substance or the energy, the material being supplied to the plant; and an optimization unit configured to optimize operation of the plant based on the current information or the predicted information regarding the electric power supplied to the plant acquired by the electric power information acquisition unit, the current information or the predicted information regarding the material supplied to the plant acquired by the material information acquisition unit, and a plant prediction model that predicts the operation of the plant.

## Description

### Technical Field

The present disclosure relates to a technology for supporting an operation of a system that produces a substance or energy using electric power.

### Background Art

A technology (Power-to-X) for converting electric power into some form of energy for storage and utilization is gaining attention. For example, Patent Literature 1 discloses a technology that calculates capacities and operation plans of each facility, and a transport amount and a transport schedule for maximizing profit for a supply side, a consumer, or an entire gas energy supply and demand system, by using an energy flow optimization method that considers the timing of electric power generation using renewable energy, gas energy production, transport, and demand, with reference to an electric power generation amount DB storing information on an electric power generation amount, a demand amount DB storing information on a demand amount, a transportation means DB storing information on transportation means, a facility DB storing information on facilities, and an energy price DB storing information on an energy unit price.

### Citation List

### Patent Literature

[Patent Literature 1] Japanese Unexamined Patent Application Publication No. 2019-144897

### Summary of Invention

### Technical Problem

A supply of materials such as renewable energy and exhaust gas containing carbon dioxide, and a demand for products can fluctuate from moment to moment. The inventors have recognized it as a problem that in order to improve the profit of an entire system including an electric power and material supply source and a plant that produces products from materials using electric power, it is necessary to optimize the operation of the entire system in accordance with fluctuations in the material supply and the product demand.

An object of the present disclosure is to appropriately support the operation of a system that produces a substance or energy using electric power.

### Solution to Problem

To solve the above problem, an operation support device according to an aspect of the present disclosure comprises: an electric power information acquisition unit configured to acquire current information or predicted information regarding electric power supplied to a plant that produces a substance or energy using electric power; a material information acquisition unit configured to acquire current information or predicted information regarding a material for producing the substance or the energy, the material being supplied to the plant; and an optimization unit configured to optimize operation of the plant based on the current information or the predicted information regarding the electric power supplied to the plant acquired by the electric power information acquisition unit, the current information or the predicted information regarding the material supplied to the plant acquired by the material information acquisition unit, and a plant prediction model that predicts the operation of the plant.

Another aspect of the present disclosure is an operation support program. This program causes a computer to function as: an electric power information acquisition unit configured to acquire current information or predicted information regarding electric power supplied to a plant that produces a substance or energy using electric power; a material information acquisition unit configured to acquire current information or predicted information regarding a material for producing the substance or the energy, the material being supplied to the plant; and an optimization unit configured to optimize operation of the plant based on the current information or the predicted information regarding the electric power supplied to the plant acquired by the electric power information acquisition unit, the current information or the predicted information regarding the material supplied to the plant acquired by the material information acquisition unit, and a plant prediction model that predicts the operation of the plant.

Yet another aspect of the present disclosure is an operation support method. This method causes a computer to execute the steps of: acquiring current information or predicted information regarding electric power supplied to a plant that produces a substance or energy using electric power; acquiring current information or predicted information regarding a material for producing the substance or the energy, the material being supplied to the plant; and optimizing operation of the plant based on the current information or the predicted information regarding the electric power supplied to the plant, the current information or the predicted information regarding the material supplied to the plant, and a plant prediction model that predicts the operation of the plant.

Note that any combination of the above components, and any conversion of the expressions of the present disclosure among a method, a device, a system, a recording medium, a computer program, and the like are also effective as aspects of the present disclosure.

According to the present disclosure, it is possible to appropriately support the operation of a system that produces a substance or energy using electric power.

### Brief Description of Drawings

FIG. 1 is a diagram showing a configuration of a fuel production system according to an embodiment.
FIG. 2 is a diagram schematically showing a functional configuration of the fuel production system.
FIG. 3 is a diagram schematically showing a configuration of a fuel production plant.
FIG. 4 is a diagram schematically showing a configuration of a plant control system.
FIG. 5 is a diagram schematically showing a configuration of an operation support device.
FIG. 6 is a flowchart showing a procedure of an operation support method according to the embodiment.

### Description of Embodiments

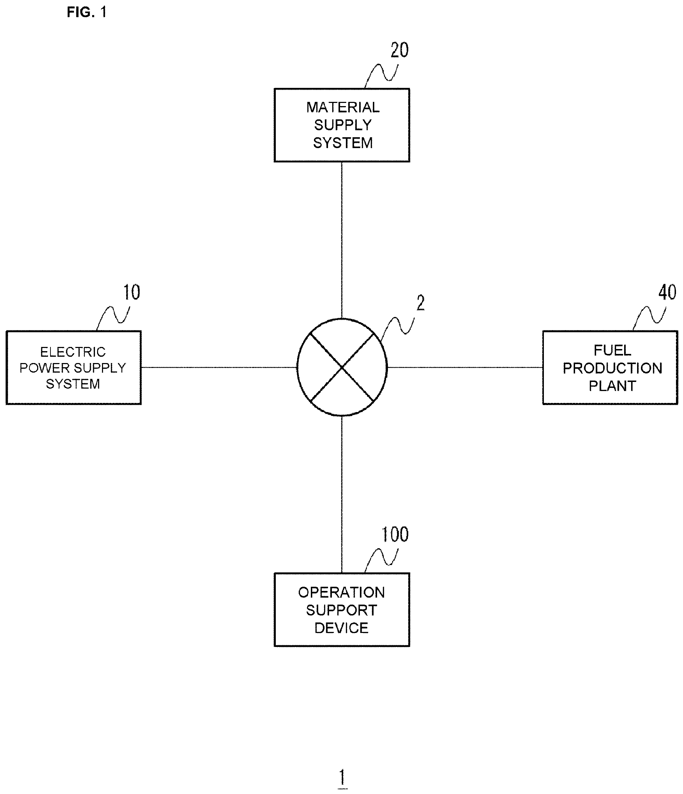

FIG. 1 shows a configuration of a fuel production system according to an embodiment. A fuel production system 1 produces products and energy from a material using electric power. A fuel production plant 40, for example, produces hydrocarbons from a material, and separates, refines, and reforms the hydrocarbons to produce a fuel. A material supply system 20 supplies the material to the fuel production plant 40. An electric power supply system 10 supplies the electric power used to produce the products and the energy from the material. An operation support device 100 supports comprehensive control of operations of the electric power supply system 10, the material supply system 20, and the fuel production plant 40. The electric power supply system 10, the material supply system 20, the fuel production plant 40, and the operation support device 100 are connected by a communication network such as the Internet 2.

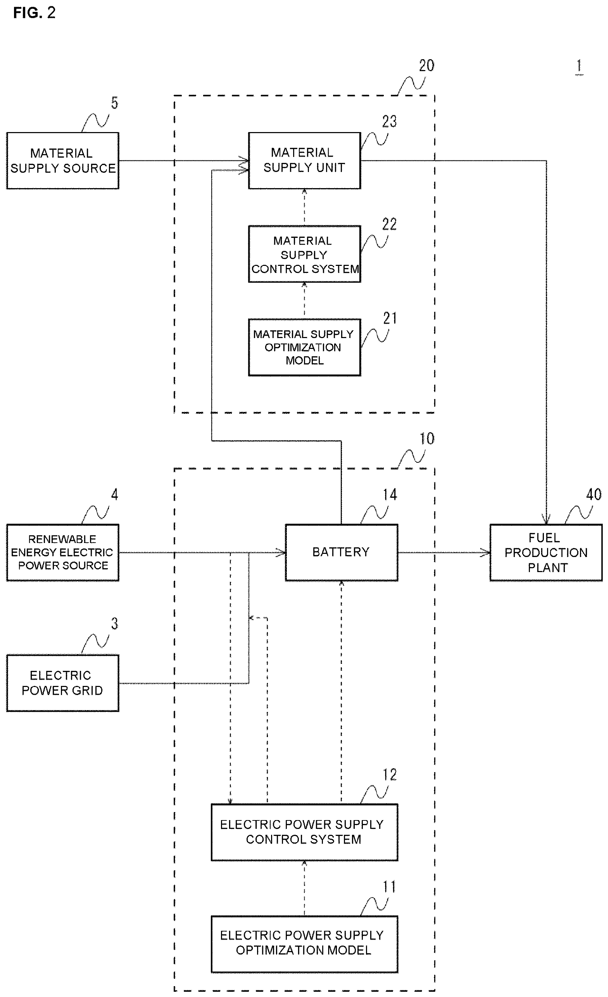

FIG. 2 schematically shows a functional configuration of the fuel production system 1. In the figure, solid arrows indicate a flow of electric power, materials, and the like, and dashed arrows indicate a flow of control signals and information.

The electric power supply system 10 includes an electric power supply control system 12 and a battery 14. The electric power supply control system 12 levels fluctuations in the electric power supplied from a renewable energy electric power source 4 using electric power supplied from an electric power grid 3. The battery 14 stores at least a part of the electric power supplied from the renewable energy electric power source 4 or the electric power grid 3. The electric power supply control system 12 controls charging and discharging of the battery 14 and each component of the electric power supply system 10 to supply the electric power to the material supply system 20 or the fuel production plant 40. The electric power supply control system 12 controls components such as the battery 14 using an electric power supply optimization model 11 for optimizing control of the components such as the battery 14, based on a current value or a predicted value of the electric power supplied from the renewable energy electric power source 4, a current value or a predicted value of the electric power to be supplied to the material supply system 20 or the fuel production plant 40, a current value or a predicted value of a state quantity representing a state of the battery 14, a current value or a predicted value of a control amount for controlling the battery 14, and the like. The electric power supply control system 12 may control the components such as the battery 14 by searching for a value of a control amount of the components such as the battery 14 that can optimize an operating rate of the components, an operating cost, a profit of the electric power supply system 10, and the like, based on the current value or the predicted value of the electric power supplied from the renewable energy electric power source 4, the current value or the predicted value of the electric power to be supplied to the material supply system 20 or the fuel production plant 40, the current value or the predicted value of the state quantity representing the state of the components such as the battery 14, the current value or the predicted value of the control amount for controlling the components such as the battery 14, and the like, and automatically setting the searched value of the control amount or presenting it to an operator. Note that the battery 14 may not be provided when the fluctuations in the electric power supplied from the renewable energy electric power source 4 can be absorbed by the electric power supplied from the electric power grid 3, and the electric power required by the material supply system 20 or the fuel production plant 40 can be supplied.

The material supply system 20 includes a material supply control system 22 and a material supply unit 23. The material supply unit 23 supplies the material supplied from a material supply source 5 to the fuel production plant 40. The material supply unit 23 may supply the material supplied from the material supply source 5 to the fuel production plant 40 as it is. In this case, the material supply unit 23 may not be provided. The material supply unit 23 may separate, refine, and recover the material supplied from the material supply source 5 before supplying it to the fuel production plant 40. In this case, the material supply unit 23 may include a device for separating, refining, and recovering the material containing impurities and the like. The material supply unit 23 may produce the material using the electric power supplied from the electric power supply system 10. The material includes substances used to produce the fuel in the fuel production plant 40, industrial water, and the like. The material supply control system 22 controls the material supply unit 23 using a material supply optimization model 21 for optimizing control of the material supply unit 23, based on a current value or a predicted value of the electric power supplied from the electric power supply system 10, a current value or a predicted value of the amount of the material to be supplied to the fuel production plant 40, a current value or a predicted value of a state quantity representing a state of the material supply unit 23, a current value or a predicted value of a control amount for controlling the material supply unit 23, and the like. The material supply control system 22 may control the material supply unit 23 by searching for a value of a control amount of the material supply unit 23 that can optimize an operating rate of the material supply unit 23, an operating cost, a profit of the material supply system 20, and the like, based on the current value or the predicted value of the electric power supplied from the electric power supply system 10, the current value or the predicted value of the amount of the material to be supplied to the fuel production plant 40, the current value or the predicted value of the state quantity representing the state of the material supply unit 23, the current value or the predicted value of the control amount for controlling the material supply unit 23, and the like, and automatically setting the searched value of the control amount or presenting it to an operator.

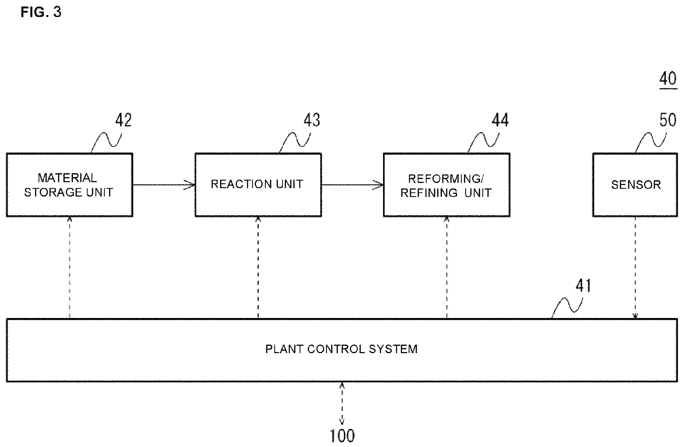

FIG. 3 schematically shows a configuration of the fuel production plant 40.

The fuel production plant 40 includes a plant control system 41, a material storage unit 42, a reaction unit 43, a reforming/refining unit 44, and a sensor 50.

The material storage unit 42 temporarily holds the material supplied from the material supply system 20 and supplies it to the reaction unit 43. When using electric power in the fuel production plant 40, the fuel production plant 40 may include a battery for temporarily storing the electric power supplied from the electric power supply system 10. Both the material storage unit 42 and the battery may be included. Only the material storage unit 42 may be included, and the battery may not be included. Only the battery may be included, and the material storage unit 42 may not be included. Neither the material storage unit 42 nor the battery may be included.

The reaction unit 43 produces a product such as hydrocarbons from the material by a chemical reaction or the like. The reforming/refining unit 44 separates, refines, and reforms the product produced by the reaction unit 43 to produce products such as synthetic fuels like SAF (Sustainable Aviation Fuel) and methane, and chemicals such as methanol and olefins.

The sensor 50 detects a state of various components included in the fuel production plant 40.

The plant control system 41 controls configurations such as the material storage unit 42, the reaction unit 43, and the reforming/refining unit 44 based on information provided from the operation support device 100 and the like.

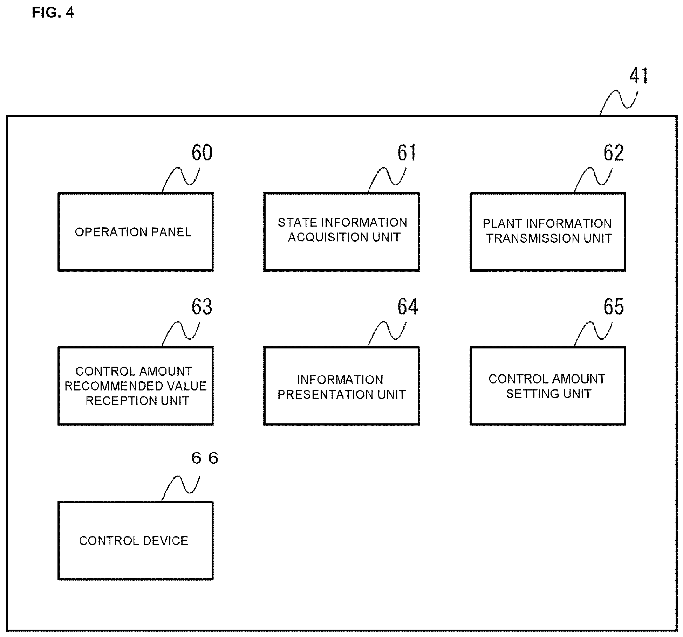

FIG. 4 schematically shows a configuration of the plant control system 41.

The plant control system 41 includes an operation panel 60, a state information acquisition unit 61, a plant information transmission unit 62, a control amount recommended value reception unit 63, an information presentation unit 64, a control amount setting unit 65, and a control device 66.

The operation panel 60 includes a display device for displaying information and an input device for receiving an input such as a setting value of a control amount from an operator.

The state information acquisition unit 61 acquires state information representing the state of the fuel production plant 40 from each component of the fuel production plant 40, the sensor 50, and the like. The state information acquisition unit 61 acquires detection information detected by the sensor 50 and state information such as a current value or a predicted value of a state quantity of each component.

The plant information transmission unit 62 transmits information regarding the state, control, and the like of the fuel production plant 40 to the operation support device 100. The plant information transmission unit 62 transmits the state information acquired by the state information acquisition unit 61 and plant information such as a current value or a predicted value of a control amount for controlling each component of the fuel production plant 40, to the operation support device 100.

The control amount recommended value reception unit 63 receives a recommended value of the control amount optimized by the operation support device 100.

The information presentation unit 64 displays on the operation panel 60 the state information acquired by the state information acquisition unit 61, a current value, a predicted value, and a recommended value of the control amount for controlling each component of the fuel production plant 40, information for detecting or predicting an abnormality of each component, and the like.

The control amount setting unit 65 receives an input of a setting value of the control amount from the operator and sets the received setting value in the control device 66. The control amount setting unit 65 may automatically set the recommended value of the control amount received by the control amount recommended value reception unit 63 in the control device 66.

The control device 66 controls each component of the fuel production plant 40 in accordance with the setting value of the control amount set by the control amount setting unit 65. The control device 66 controls an amount, a temperature, a pressure, a concentration, a flow rate, and the like of the material stored in the material storage unit 42, a reaction temperature and a reaction time of the reaction unit 43, a flow rate of the material at a reactor inlet, a flow rate of the product at a reactor outlet, and the like, and a production temperature, a production time, a pressure, a concentration, a flow rate, and the like of the product in the reforming/refining unit 44.

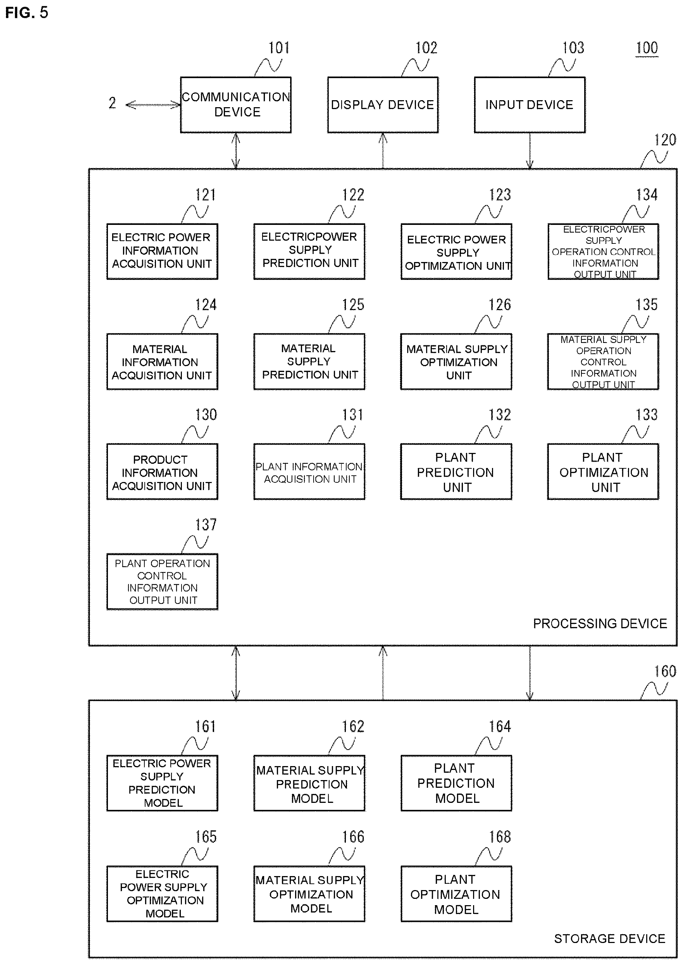

FIG. 5 schematically shows a configuration of the operation support device.

The operation support device 100 includes a communication device 101, a display device 102, an input device 103, a processing device 120, and a storage device 160.

The communication device 101 controls wireless or wired communication. The communication device 101 transmits and receives data to and from other devices via the Internet 2. The display device 102 displays a display image generated by the processing device 120. The input device 103 inputs an instruction to the processing device 120.

The storage device 160 stores data and computer programs used by the processing device 120. The storage device 160 stores an electric power supply prediction model 161, a material supply prediction model 162, a plant prediction model 164, an electric power supply optimization model 165, a material supply optimization model 166, and a plant optimization model 168.

The electric power supply prediction model 161 is a model for predicting the electric power supplied from the electric power supply system 10 to the material supply system 20 or the fuel production plant 40. The electric power supply prediction model 161 may be a simulator that simulates the operation of components such as the battery 14 based on a current value or a predicted value of the electric power supplied from the renewable energy electric power source 4, a current value or a predicted value of a state quantity representing a state of the components such as the battery 14, a current value or a predicted value of a control amount for controlling the components such as the battery 14, and the like, or a surrogate model thereof. The electric power supply prediction model 161 may be the same as that used in the electric power supply system 10, and may be provided from the electric power supply system 10 to the operation support device 100.

The material supply prediction model 162 is a model for predicting the amount of the material and the like supplied from the material supply system 20 to the fuel production plant 40. The material supply prediction model 162 may be a simulator that simulates the operation of the material supply unit 23 based on a current value or a predicted value of the electric power supplied from the electric power supply system 10, a current value or a predicted value of the amount of the material to be supplied to the fuel production plant 40, a current value or a predicted value of a state quantity representing a state of the material supply unit 23, a current value or a predicted value of a control amount for controlling the material supply unit 23, and the like, or a surrogate model thereof. The material supply prediction model 162 may be the same as that used in the material supply system 20, and may be provided from the material supply system 20 to the operation support device 100.

The plant prediction model 164 is a model for predicting the operation of the fuel production plant 40. The plant prediction model 164 may be a physical model related to a plant operating rate, a material and heat balance, a reaction performance, and the like. The plant prediction model 164 may be a combination of simulators that individually predict the operation of each component such as the material storage unit 42, the reaction unit 43, and the reforming/refining unit 44. For example, the simulator for predicting the operation of the reaction unit 43 may be a model that combines a reaction model for predicting a chemical reaction, a model for predicting catalyst degradation, a computational fluid dynamics (CFD) model for simulating a state of a fluid inside a reactor, and the like. The plant prediction model 164 may be a surrogate model trained with learning data, which is actual data from operating each component such as the material storage unit 42, the reaction unit 43, and the reforming/refining unit 44, or simulation data calculated by a simulator for predicting the operation of each component. The plant prediction model 164 may be one that inputs input information such as the amount of the material supplied from the material supply system 20 to the fuel production plant 40, and outputs output information such as a product amount, a yield, specifications (physical properties, density, viscosity, flash point, etc.), and a cost and a profit of the fuel production plant 40. The cost of the fuel production plant 40 may include expenses required to produce the fuel in the fuel production plant 40, for example, a material procurement cost, an electric power procurement cost, an equipment procurement cost, an equipment maintenance cost, a personnel cost, an administrative cost, and the like.

The electric power supply optimization model 165 is a model for optimizing the operation of the electric power supply system 10. The electric power supply optimization model 165 inputs a current value or a predicted value of the electric power supplied from the renewable energy electric power source 4, a current value or a predicted value of a state quantity representing a state of components such as the battery 14, and a current value or a predicted value of a control amount for controlling the components such as the battery 14, and the like, and outputs a setting value of the control amount that optimizes a profit, a cost, an operating rate, and the like of the electric power supply system 10. The electric power supply optimization model 165 may be the same as that used in the electric power supply system 10, and may be provided from the electric power supply system 10.

The material supply optimization model 166 is a model for optimizing the operation of the material supply system 20. The material supply optimization model 166 inputs a current value or a predicted value of the electric power supplied from the electric power supply system 10, a current value or a predicted value of the amount of the material to be supplied to the fuel production plant 40, a current value or a predicted value of a state quantity representing a state of the material supply unit 23, and a current value or a predicted value of a control amount for controlling the material supply unit 23, and the like, and outputs a setting value of the control amount that optimizes a profit, a cost, an operating rate, and the like of the material supply system 20. The material supply optimization model 166 may be the same as that used in the material supply system 20, and may be provided from the material supply system 20.

A plant optimization model 168 is a model for optimizing the operation of the fuel production plant 40. The plant optimization model 168 inputs a current value or a predicted value of the electric power supplied from the electric power supply system 10, a current value or a predicted value of the amount of the material supplied from the material supply system 20, a current value or a predicted value of a type, specifications, a demand amount, and a unit price of a product to be produced, a current value or a predicted value of a state quantity representing a state of each component, and a current value or a predicted value of a control amount for controlling each component, and the like, and outputs a setting value of the control amount that optimizes a profit, a cost, an operating rate, a product amount, a product yield, and the like of the fuel production plant 40.

The processing device 120 includes an electric power information acquisition unit 121, an electric power supply prediction unit 122, an electric power supply optimization unit 123, a material information acquisition unit 124, a material supply prediction unit 125, a material supply optimization unit 126, a product information acquisition unit 130, a plant information acquisition unit 131, a plant prediction unit 132, a plant optimization unit 133, an electric power supply operation control information output unit 134, a material supply operation control information output unit 135, and a plant operation control information output unit 137. In terms of hardware components, these configurations are realized by any circuit, a computer CPU, a memory, a program loaded into the memory, and the like, but here, functional blocks realized by their cooperation are depicted. Therefore, it will be understood by those skilled in the art that these functional blocks can be realized in various forms by hardware alone, software alone, or a combination thereof.

The electric power information acquisition unit 121 acquires current information or predicted information regarding the electric power supplied from the electric power supply system 10 to the material supply system 20 or the fuel production plant 40. The electric power information acquisition unit 121 acquires from the electric power supply system 10 a current value or a predicted value of the electric power supplied from the renewable energy electric power source 4, a current value or a predicted value of a price of the electric power, a current value or a predicted value of a state quantity representing a state of components such as the battery 14, a current value or a predicted value of a control amount for controlling the components such as the battery 14, a current value or a predicted value of the electric power supplied from the electric power supply system 10 to the material supply system 20 or the fuel production plant 40, and the like.

The electric power supply prediction unit 122 uses the electric power supply prediction model 161 to predict the electric power to be supplied from the electric power supply system 10 to the material supply system 20 or the fuel production plant 40 in the future.

The electric power supply optimization unit 123 uses the electric power supply optimization model 165 to calculate a setting value of a control amount that can optimize the operation of the electric power supply system 10.

The electric power supply operation control information output unit 134 outputs the setting value of the control amount calculated by the electric power supply optimization unit 123 to the electric power supply system 10 as an optimal operation control mode. The electric power supply control system 12 controls the operation of the electric power supply system 10 based on the setting value of the control amount acquired from the operation support device 100. When the electric power supply system 10 is configured not to receive the setting value of the control amount from the operation support device 100, the electric power supply operation control information output unit 134 may not be provided.

When the electric power information acquisition unit 121 acquires information regarding the electric power when the electric power supply system 10 is operated as optimized by the electric power supply system 10, the electric power supply prediction unit 122 and the electric power supply optimization unit 123 may not be provided.

The material information acquisition unit 124 acquires current information or predicted information regarding the material supplied from the material supply system 20 to the fuel production plant 40. The material information acquisition unit 124 acquires from the material supply system 20 a current value or a predicted value of the electric power supplied from the electric power supply system 10, a current value or a predicted value of the amount of the material to be supplied to the fuel production plant 40, a current value or a predicted value of a state quantity representing a state of the material supply unit 23, a current value or a predicted value of a control amount for controlling the material supply unit 23, an amount and a price of the material supplied from the material supply system 20 to the fuel production plant 40, and the like.

The material supply prediction unit 125 uses the material supply prediction model 162 to predict the amount of the material to be supplied from the material supply system 20 to the fuel production plant 40 in the future.

The material supply optimization unit 126 uses the material supply optimization model 166 to calculate a setting value of a control amount that can optimize the operation of the material supply system 20. The material supply optimization unit 126 optimizes the operation of the material supply system 20 based on the electric power predicted to be supplied from the electric power supply system 10 to the material supply system 20 when the electric power supply system 10 is operated as optimized by the electric power supply optimization unit 123.

The material supply operation control information output unit 135 outputs the setting value of the control amount calculated by the material supply optimization unit 126 to the material supply system 20 as an optimal operation control mode. The material supply control system 22 controls the operation of the material supply system 20 based on the setting value of the control amount acquired from the operation support device 100. When the material supply system 20 is configured not to accept the setting value of the control amount from the operation support device 100, the material supply operation control information output unit 135 may not be provided.

When the material information acquisition unit 124 acquires information regarding the material when the material supply system 20 is operated as optimized by the material supply system 20, the material supply prediction unit 125 and the material supply optimization unit 126 may not be provided.

The product information acquisition unit 130 acquires information such as a current value or a predicted value of a type, specifications, a demand amount, a price, and the like of a fuel to be produced as a product.

The plant information acquisition unit 131 acquires current information or predicted information regarding the fuel production plant 40. The plant information acquisition unit 131 acquires from the fuel production plant 40 a current value or a predicted value of the electric power supplied from the electric power supply system 10, a current value or a predicted value of the amount of the material supplied from the material supply system 20, a current value or a predicted value of a type, specifications, a demand amount, and a unit price of a product to be produced, a current value or a predicted value of a state quantity representing a state of each component, a current value or a predicted value of a control amount for controlling each component, a current value or a predicted value of an amount, a yield, a quality, and the like of a produced product, and the like.

The plant prediction unit 132 uses the plant prediction model 164 to predict a state, an operating rate, a product amount, a product yield, product specifications, and the like of the fuel production plant 40. The plant prediction unit 132 outputs a prediction result to the fuel production plant 40.

The plant optimization unit 133 uses the plant optimization model 168 to calculate a setting value of a control amount that can optimize the operation of the fuel production plant 40. The plant optimization unit 133 optimizes the operation of the fuel production plant 40 based on the electric power predicted to be supplied from the electric power supply system 10 to the material supply system 20 or the fuel production plant 40 when the electric power supply system 10 is operated as optimized by the electric power supply optimization unit 123, and the amount of the material predicted to be supplied from the material supply system 20 to the fuel production plant 40 when the material supply system 20 is operated as optimized by the material supply optimization unit 126. The plant optimization unit 133 outputs the calculated setting value of the control amount to the fuel production plant 40 as a recommended value.

The plant optimization unit 133 may comprehensively optimize the operations of the electric power supply system 10, the material supply system 20, and the fuel production plant 40 using the electric power supply optimization model 165, the material supply optimization model 166, and the plant optimization model 168, based on a current value and a predicted value of a type, specifications, a demand amount, a price, and the like of a fuel to be produced as a product acquired by the product information acquisition unit 130, and current information and predicted information regarding the fuel production plant 40 acquired by the plant information acquisition unit 131. In this case, the electric power supply operation control information output unit 134 outputs the calculated setting value of the control amount to the electric power supply system 10 as an optimal operation control mode. The material supply operation control information output unit 135 outputs the calculated setting value of the control amount to the material supply system 20 as an optimal operation control mode. The plant optimization unit 133 outputs the calculated setting value of the control amount to the fuel production plant 40 as a recommended value of the optimal operation control mode.

When all parameters such as fluctuating state quantities in the fuel production system 1 are optimized together, a calculation load becomes enormous, making it difficult to optimize the operation in real time. However, since the operation support device 100 of the present embodiment comprehensively optimizes the entire fuel production system 1 while locally optimizing the operations of the electric power supply system 10, the material supply system 20, and the fuel production plant 40, it is possible to efficiently optimize the entire fuel production system 1 while suppressing the calculation load. Thereby, since the operation of the fuel production system 1 can be optimized in real time at predetermined time intervals, the productivity of the fuel production system 1 can be maximized.

A time interval at which the operation support device 100 optimizes the entire operation of the fuel production system 1 and changes the setting value of the control amount may be determined according to a capacity of a storage unit provided in the fuel production plant 40 for temporarily storing at least one of the electric power and the material. For example, this time interval may be determined according to the capacity of the material storage unit 42. Further, this time interval may be determined according to the capacity of the battery 14. The larger the capacity of the storage unit, the higher the ability to absorb fluctuations in the supply amount of the electric power or the material, so the time interval may be increased. The time interval may be, for example, from a few seconds to a few minutes.

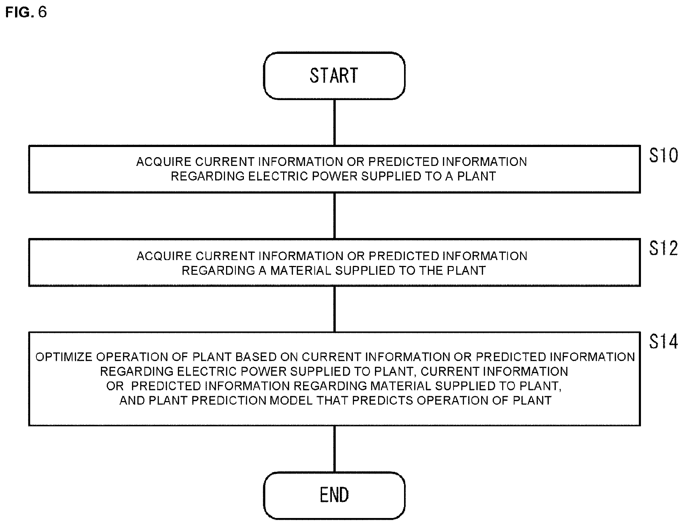

FIG. 6 is a flowchart showing a procedure of an operation support method according to the embodiment. The electric power information acquisition unit 121 of the operation support device 100 acquires current information or predicted information regarding the electric power supplied to the fuel production plant 40 (S10). The material information acquisition unit 124 acquires current information or predicted information regarding the material supplied to the fuel production plant 40 (S12). The plant optimization unit 133 optimizes the operation of the fuel production plant 40 based on the current information or the predicted information regarding the electric power acquired by the electric power information acquisition unit 121, the current information or the predicted information regarding the material acquired by the material information acquisition unit 124, and the plant prediction model 164 that predicts the operation of the plant (S14).

The present disclosure has been described above based on an embodiment. This embodiment is an exemplification, and it will be understood by those skilled in the art that various modifications can be made to combinations of the respective constituent elements and respective processing processes, and that such modifications are also within the scope of the present disclosure.

In the above embodiment, a case has been described where the operation of a fuel production system that produces hydrocarbon fuel from a material using electric power is explained, but the technology of the present disclosure is applicable to any system that produces a substance or energy using electric power.

The technology of the present embodiment can be used not only for optimizing the operation of a plant in real time during the operation of the plant, but also for use as an operation index for an operator during the operation of the plant, for formulating an operation plan for the plant, and for designing the plant.

### Reference Signs List

1 fuel production system, 2 internet, 3 electric power grid, 4 renewable energy electric power source, 5 material supply source, 10 electric power supply system, 11 electric power supply optimization model, 12 electric power supply control system, 14 battery, 20 material supply system, 21 material supply optimization model, 22 material supply control system, 23 material supply unit, 40 fuel production plant, 41 plant control system, 42 material storage unit, 43 reaction unit, 44 reforming/refining unit, 50 sensor, 60 operation panel, 61 state information acquisition unit, 62 plant information transmission unit, 63 control amount recommended value reception unit, 64 information presentation unit, 65 control amount setting unit, 66 control device, 100 operation support device, 121 electric power information acquisition unit, 122 electric power supply prediction unit, 123 electric power supply optimization unit, 124 material information acquisition unit, 125 material supply prediction unit, 126 material supply optimization unit, 130 product information acquisition unit, 131 plant information acquisition unit, 132 plant prediction unit, 133 plant optimization unit, 134 electric power supply operation control information output unit, 135 material supply operation control information output unit, 137 plant operation control information output unit, 161 electric power supply prediction model, 162 material supply prediction model, 164 plant prediction model, 165 electric power supply optimization model, 166 material supply optimization model, 168 plant optimization model.

## Claims

1. An operation support device comprising:
an electric power information acquisition unit configured to acquire current information or predicted information regarding electric power supplied to a plant that produces a substance or energy using electric power;
a material information acquisition unit configured to acquire current information or predicted information regarding a material for producing the substance or the energy, the material being supplied to the plant; and
an optimization unit configured to optimize operation of the plant based on the current information or the predicted information regarding the electric power supplied to the plant acquired by the electric power information acquisition unit, the current information or the predicted information regarding the material supplied to the plant acquired by the material information acquisition unit, and a plant prediction model that predicts the operation of the plant.

2. The operation support device according to Claim 1, wherein
the electric power information acquisition unit acquires predicted information regarding electric power optimized at an electric power supply source that supplies the electric power to the plant, and
the material information acquisition unit acquires predicted information regarding a material optimized at a material supply source that supplies the material to the plant.

3. The operation support device according to Claim 2, further comprising:
an electric power optimization model that optimizes the electric power supplied from the electric power supply source to the plant, wherein
the electric power information acquisition unit acquires predicted information regarding the electric power optimized by the electric power optimization model.

4. The operation support device according to Claim 3, further comprising:
a material optimization model that optimizes the material supplied from the material supply source to the plant, wherein
the material information acquisition unit acquires predicted information regarding the material optimized by the material optimization model.

5. The operation support device according to Claim 4, wherein
the optimization unit uses the electric power optimization model, the material optimization model, and the plant prediction model to comprehensively optimize operations of the electric power supply source, the material supply source, and the plant.

6. The operation support device according to Claim 5, further comprising:
an output unit configured to output an operation control mode for at least one of the electric power supply source, the material supply source, and the plant to realize an operation thereof optimized by the optimization unit.

7. The operation support device according to any one of Claims 1 to 6, wherein
the optimization unit optimizes at least one of profit, cost, product yield, product amount, and product specifications in the plant.

8. The operation support device according to any one of Claims 1 to 6, further comprising:
a demand acquisition unit configured to acquire a current or future demand amount or price of the substance or the energy produced by the plant, wherein
the optimization unit further optimizes the operation of the plant based on the demand amount or the price acquired by the demand acquisition unit.

9. The operation support device according to any one of Claims 1 to 6, further comprising:
an operation information acquisition unit configured to acquire information indicating a current operation state and operation conditions of the plant, wherein
the optimization unit further optimizes the operation of the plant based on the current operation state and the operation conditions of the plant acquired by the operation information acquisition unit.

10. The operation support device according to any one of Claims 1 to 6, wherein
the optimization unit optimizes the operation of the plant at predetermined time intervals.

11. The operation support device according to Claim 10, wherein
the predetermined time interval is determined according to a capacity of a storage unit provided in the plant for temporarily storing at least one of the electric power and the material.

12. An operation support program for causing a computer to function as
an electric power information acquisition unit configured to acquire current information or predicted information regarding electric power supplied to a plant that produces a substance or energy using electric power;
a material information acquisition unit configured to acquire current information or predicted information regarding a material for producing the substance or the energy, the material being supplied to the plant; and
an optimization unit configured to optimize operation of the plant based on the current information or the predicted information regarding the electric power supplied to the plant acquired by the electric power information acquisition unit, the current information or the predicted information regarding the material supplied to the plant acquired by the material information acquisition unit, and a plant prediction model that predicts the operation of the plant.

13. An operation support method causing a computer to execute the steps of
acquiring current information or predicted information regarding electric power supplied to a plant that produces a substance or energy using electric power;
acquiring current information or predicted information regarding a material for producing the substance or the energy, the material being supplied to the plant; and
optimizing operation of the plant based on the current information or the predicted information regarding the electric power supplied to the plant, the current information or the predicted information regarding the material supplied to the plant, and a plant prediction model that predicts the operation of the plant.
